# EUROPEAN PATENT APPLICATION

(11) **EP 1 249 953 A1**
(43) Date of publication of application: **16.10.2002**
(21) Application number: 01303434.3
(22) Date of filing: 12.04.2001
(51) Int. Cl.: H04J 3/14, H04J 3/16

(54) **Method and apparatus for identifying hierarchical data structures**

(71) Applicant: Agilent Technologies, Inc. (a Delaware corporation), Palo Alto, CA 94303 (US)
(72) Inventor: Melville, Robert George Andrew, Edinburgh EH4 2BY (GB); Cronshaw, Peter Richard, Balemo, Midlothian EH14 5SX (GB)
(74) Representative: Coker, David Graeme

(57) **Abstract**

A data communications signal conforming to the SDH/SONET hierarchy of data structures is analysed to determine the structure to which it conforms. Payload pointers within the signal are extracted and interpreted to establish their status. The pointer statuses are grouped and analysed, enabling the structure of the payload data to be established. The structure of the data signal is displayed in a format which conveys the information concisely, and facilitates detailed investigation of individual characteristics of the data signal.

## Description

### Technical Field

This invention relates to methods and apparatus for identifying hierarchical data structures, such as the digital data transport structures defined in the Synchronous Digital Hierarchy (SDH) and Synchronous Optical Network (SONET) standards.

### Background Art

The SDH and SONET standards have been devised to facilitate the flexible, cost-effective transmission of very large volumes of digital data over data communications networks, especially those using optical physical links. Equipment conforming to these standards has been deployed globally on a large scale. The standards define a hierarchy of data frame structures which enable increases in data transmission rates to be readily accommodated by the standards, for example in response to the continuing increase in demand for data transmission capacity. Currently equipment operating at approximately 10 Gb/s is being deployed (using SDH STM-64 or SONET OC-192 frames), and the standards are being expanded to define frame structures for 40 Gb/s operation (SDH STM-256 and SONET OC-768).

Reliable operation of network equipment operating at these speeds requires careful testing and maintenance, which in turn rely on the use of highly-capable test and measuring apparatus. For example, a physical transmission system conforming to SDH or SONET may be carrying any of several different frame structures in the hierarchy, such as STM-1, STM-4, STM-16 or STM-64 (SONET OC-3, OC-12, OC-48 or OC-192), depending on the line rate of data transmission. Each of these structures in turn can contain various arrangements of data payloads, such as SDH Administrative Units AU-3 and AU-4 or SONET Synchronous Transport Signals STS-1 and STS-3c, which may each carry independent data streams or may be concatenated to combine their capacity. Efficient supervision and failure resolution in such a system demand test equipment which can rapidly identify a specific frame structure in use and provide sophisticated and detailed display of information about that structure and its contents.

It is an object of this invention to provide methods and apparatus which facilitate testing and maintenance of these kinds of data communication networks.

### Disclosure of Invention

According to one aspect of this invention there is provided a method of analysing a data communications signal to identify one of a plurality of hierarchically-organised data structures to which it conforms, comprising the steps of:
receiving the data communications signal;
identifying pointers within the signal related to data payloads carried by the signal;
allocating to each pointer one of a predetermined plurality of statuses indicative of predetermined characteristics of the data payload associated with that pointer;
grouping the pointers in accordance with multiplexing of component parts of the associated data payloads; and
analysing in combination the statuses of the grouped pointers to determine the data structure of the signal.

According to another aspect of this invention there is provided a method of displaying structural information relating to a data communications signal conforming to a hierarchical data structure, comprising the steps of:
allocating respective portions of a display to respective levels of a hierarchical data structure;
displaying within each display portion at least one graphical element corresponding to at least one data channel within the data structure level represented by that display portion;
controlling the relative sizes of graphical elements within each display portion in accordance with the data carrying capacity of the data channels to which those graphical elements correspond, within the data structure level represented by that display portion; and
controlling at least one other visual feature of each graphical element in accordance with a characteristic of the data channel to which that graphical element corresponds.

### Brief Description of Drawings

A method and apparatus in accordance with this invention, for identifying, analysing and displaying the structure of SDH/SONET frames, will now be described, by way of example, with reference to the accompanying drawings, in which:
- Figure 1: shows the generic structure of SDH STM-N synchronous transport module frames (SONET OC-*n* frames, where *n*=1 for N=0 and otherwise *n*=N*3);
- Figure 2: is a block schematic diagram of apparatus for implementing the invention;
- Figures 3*a* and 3*b*: show allocations of the composition of AUs or STSs according to the different possible combinations of pointer statuses encountered in a frame; and
- Figures 4 to 9: show examples of displays of frame structure information provided by the invention.

### Best Mode for Carrying Out the Invention, & Industrial Applicability

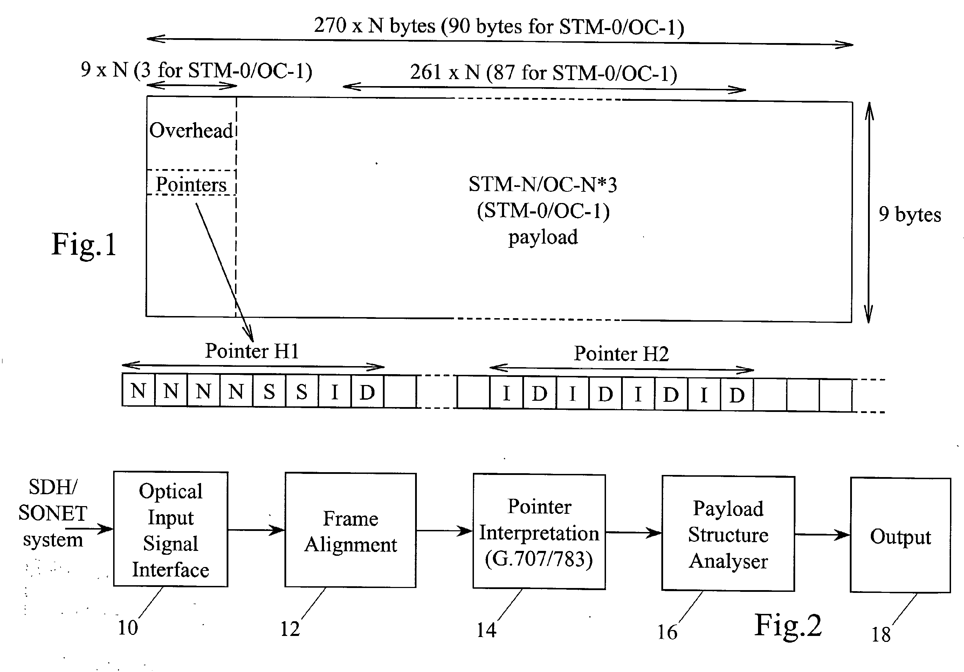

Figure 1 shows the principal details of the generic structure of SDH STM-N frames, or equivalently SONET OC-*n* frames where *n*=1 for N=0 and otherwise *n*=N*3 (i.e. an SDH STM-16 frame, line rate 2.488 Gb/s, is equivalent to a SONET OC-48 frame).

Referring to Figure 1, a frame comprises a sequence of bytes which are notionally organised in nine rows, each row of bytes being transmitted in succession starting with the top row. The number of bytes in a row depends on the line rate in use. For the minimum line rate of 51.84 Mb/s (STM-0/OC-1) there are 90 bytes per row, the first three of which comprise overhead for system control and the remaining 87 being used to carry payload. For higher line rates (N = 1, 4, 16, etc.) there are 270*N bytes in each row, the overhead bytes comprising the first 9*N of these and the payload comprising the remaining 261*N bytes. For example, and STM-1 (OC-3) frame has 270 bytes per row, of which the first nine comprise overhead bytes, and an STM-16 (OC-48) frame has 4320 bytes per row, of which the first 144 comprise overhead bytes.

The starting point of the data payload associated with a particular frame can be offset relative to the start of the frame and therefore relative to the position of the first payload-carrying byte in the first row, to facilitate operation in large synchronous networks. To this end the first 9*N bytes (the first three bytes for STM-0/OC-1) in the fourth row are used as pointers to control the operation of this offset.

The higher line-rate frames are typically assembled by byte-interleaved multiplexing of the payload bytes of lower-rate frames. Each payload pointer comprises three bytes (H1, H2 and H3) which are therefore interleaved with the pointer bytes for other payloads, so that the H1 pointer bytes for the multiplexed payloads are grouped together, followed by the H2 pointer bytes and then the H3 pointer bytes.

The H1 and H2 pointer bytes are used to indicate the payload offset described above, as well as incremental changes to that offset (justification), resetting of the offset to a new value when there is a change to a different payload, concatenation of the payloads of successive frames to combine their capacity, and certain alarm conditions, as follows:
- Byte H1, bits 1-4: New Data flag, with a value of 1001 if the frame contains a new payload and 0110 otherwise;
- Byte H1, bits 5 and 6: used in certain cases to provide size information;
- Byte H1, bits 7 and 8 and byte H2: 10-bit pointer value indicating payload offset from start of frame; bit 7 of byte H1 and bits 1, 3, 5 and 7 of byte H2 are inverted if the offset is being increased, and the remaining five bits of the pointer value are inverted if the offset is being decreased;
- In the case of a concatenated payload, the pointer has a value of 1111111111 and the New Data flag is set (so the value of the H1 and H2 bytes combined is 1001SS11 11111111, known as Concatenation Indication);
- In the case of an Alarm Indication Signal (AIS), indicating a failure elsewhere in the network, all bits of the pointer are set to a value of 1.

The present invention examines the values of these pointer bytes, extracts information from them, and analyses this information as described below to provide a concise but detailed description of the structure and status of the frames. A block diagram of apparatus for performing these functions is shown in Figure 2. This diagram assumes that the system under test is transmitting the SDH/SONET signal in optical form. In some cases the signal may be electrical (e.g. at STM-0 or STM-1 line rates), in which case optical to electrical conversion is not required.

Referring to Figure 2, a signal in an SDH or SONET system under test is supplied to an optical interface 10 of the apparatus, for conversion to electrical form, recovery of clock data, analogue to digital conversion etc. The resulting digital output signal from the interface 10 is supplied to a frame alignment circuit 12 which inspects the digital data stream for a specific frame alignment pattern indicating the start of an SDH/SONET frame. The data stream and the frame alignment information are passed to a pointer interpretation circuit 14 which uses the frame alignment information to locate the pointer bytes by their position relative to the start of a frame. Having located these bytes the circuit 14 applies known algorithms to interpret the values of the pointer bytes, for example as described in International Telecommunication Union (ITU) Recommendations G.707 and G.783. The design and operation of the interface 10, frame alignment circuit 12 and pointer interpretation circuit 14 are well known to those skilled in the relevant art and need not be described in further detail here.

The output from the pointer interpretation circuit 14 comprises an indication of the status, for each payload contained in the frame being inspected, of that payload's pointer (comprising the three bytes H1, H2, H3). The pointer may be allocated any one of four statuses, as follows:
- N (normal): the pointer has a normal, expected value for a valid payload, irrespective of the presence of new data or a change in offset (that is, none of the following three statuses apply);
- CI: the pointer bytes H1 and H2 have the special values described above for Concatenation Indication;
- AIS: the pointer bytes have the special value of all-1's for an Alarm Indication Signal;
- LOP: a valid pointer value cannot be obtained by the pointer interpretation circuit 14, and the AIS status does not apply, or a number of consecutive pointers has been received not indicating concatenation but with the first four bits of byte H1 set to 1001.

The status outputs from the interpretation circuit 14 are supplied to a payload structure analyser 16, which examines the status of each payload's pointer in the frame. Where there are three or more payloads in the frame (i.e. for higher line rates than STM-0/OC-1), their pointer statuses are examined in combination. Many combinations which can in principle be listed should actually never be generated by SDH or SONET equipment operating normally, for example because they relate to impossible or forbidden conditions (such as the first of two payloads being indicated as concatenated but the remaining one being indicated as normal). Nonetheless, the analyser 16 has provision for all status combinations which can be listed, because any of them might be detected following signal corruption prior to the point where the system under test is being monitored. Furthermore, it is possible in some cases to deduce with a high degree of confidence the valid payload combination which does exist, despite such signal corruption.

The payload structure analyser 16 can conveniently be implemented for example by using a data processor, with associated data storage (memory), arranged to implement an analysis procedure defined by software program instructions held in the memory. The procedure specified by the program instructions is as described below. For the purposes of this description it is assumed that the status of each pointer is held in a respective pointer status register (PSR), e.g. in the data storage associated with the processor. The total number of storage registers required depends on the maximum number of payloads which can be multiplexed into the highest line-rate frame to be analysed (e.g. 192 for a 9.953 Gb/s STM-64/OC-192 signal). For a given frame the total number of registers actually used (PSRmax) will depend on the maximum number of possible payloads for the line rate of that frame.

### Analysis part 1

If the status of the first pointer is N and the status in the remaining pointer registers is either all N or all CI, the sequence of Ns and CIs represents a legal payload. In this case the following results can be provided (otherwise the analysis proceeds to part 3 below):
- If the line rate is STM-0/OC-1, then the payload is deemed to be an SDH AU-3 (SONET STS-1);
- If the line rate is STM-1/OC-3, then if the three pointers are N, N, N the entire payload is deemed to be 3 SDH AU-3s (SONET STS-1s); if the three pointers are N, CI, CI, then the entire payload is deemed an AU-4 (STS-3c). Otherwise the payload is deemed "illegal", in which case no further analysis is undertaken;
- If the line rate is STM-4/OC-12 or faster, the analysis proceeds to part 2.

### Analysis part 2

The pointer status registers are grouped (three pointers per group) by allocating pointer 1 to group 1, pointer 2 to group 2, ... pointer PSRmax/3 to group PSRmax/3, pointer PSRmax/3 + 1 to group 1, pointer PSRmax/3 + 2 to group 2, ... pointer PSRmax*2/3 to group PSRmax/3, pointer PSRmax*2/3 + 1 to group 1, pointer PSRmax*2/3 + 2 to group 2, ... and finally pointer PSRmax to group PSRmax/3.

The pointer groups are considered in sequence, in order of their occurrence in the frame, and a possible AU-4 status for each group is established as Header, Concatenation, or All AU-3s, as follows:
- If the first pointer in a group is N and the other two are CI, then the AU-4 status is Header;
- If all pointers in a group are CI, then the AU-4 status is Concatenation;
- If all the pointers in a group are N, then the AU-4 status is All AU-3s.

These group statuses are then scanned in order of occurrence of the pointer groups. If a group has a status of All AU-3s, then it is deemed equivalent to 3 AU-3s/STS-1s. If a contiguous sequence of AU-4s is discovered in which the first has Header status and all others have Concatenation status, then this is deemed equivalent to an AU-4-Xc/STS-*nc* where X is the number of Concatenations+1 (for the header) and *n* = 3*X. If an AU-4 with Header status is discovered in any other context, it is deemed an AU-4.

### Analysis part 3

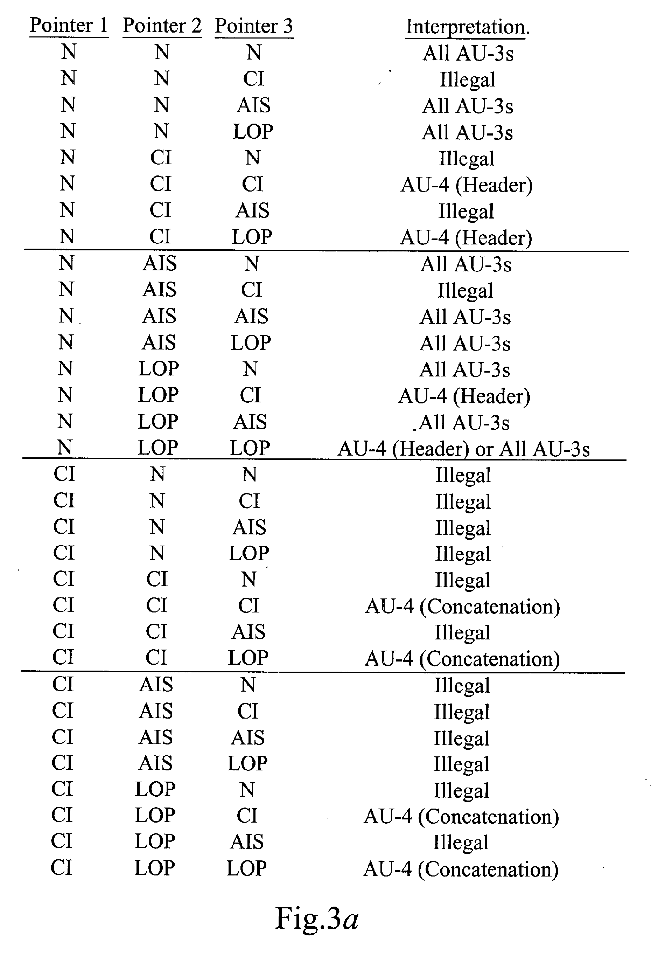

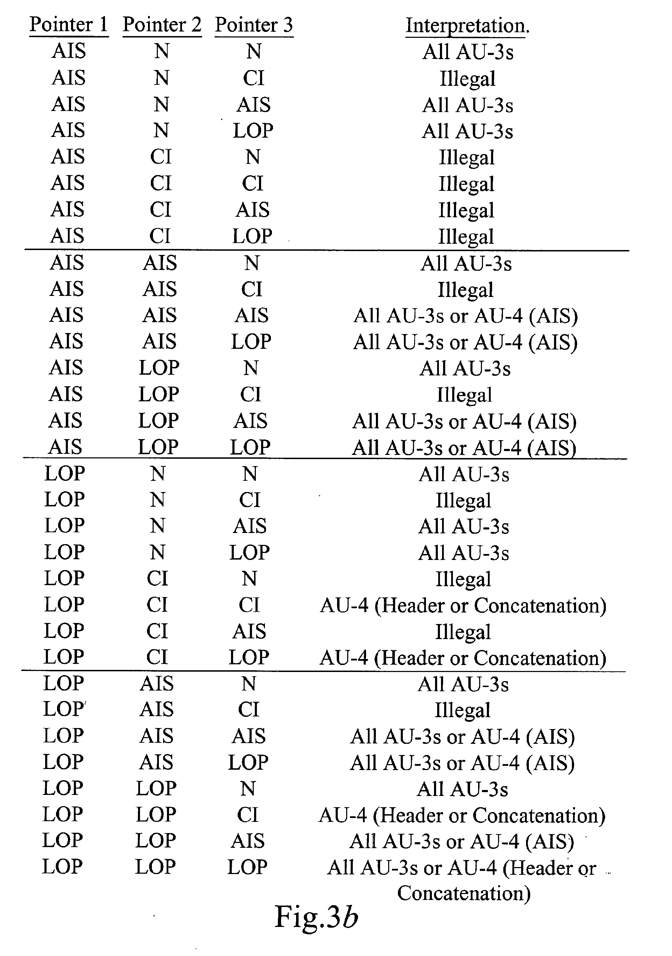

The pointer status registers are grouped as described in the first step of part 2 above. The pointer groups are considered in sequence, in order of their occurrence in the frame, and allocated an interpretation in accordance with the tables in Figures 3a and 3b. These interpretations are then further analysed as follows:
- If groups having AIS status are contiguous, then they are deemed to be equivalent to an AU-4-Xc/STS-*n*c group, where X is the number of contiguous groups and *n* = 3*X. However, the possibility of an (indeterminate) underlying structure is reported in terms of equivalent AU-4s/STS-3cs and AU-3s/STS-1s;
- If a group is ambiguously an AU-4/STS-3c or 3 AU-3s/STS-1s, it is interpreted as an AU-4/STS-3c, but the possibility of an (indeterminate) underlying structure is reported in terms of equivalent AU-3s/STS-1s;
- If a group status is ambiguously Header or Concatenation it is interpreted as Concatenation unless either the previous group status is All AU-3s, or it is the first group in the frame. The possibility of an (indeterminate) underlying structure is reported in terms of equivalent AU-4s/STS-3cs;
- If a group is a Concatenation and does not follow a Header followed by zero or more Concatenations, then it is deemed to be "illegal";
- If a group interpretation is "illegal" this is reported at the AU-3/STS-1 level.

### Analysis part 4 (Alarms and Indications)

The following additional analysis is then performed for the groups derived in parts 2 and 3 of the analysis:
- If a group is designated All AU-3s, then the status of each pointer is interpreted for the status of the LOP, AIS and "illegal" alarm statuses for the corresponding AU-3/STS-1;
- If a group is designated AU-4 (either Header or Concatenation) then the status of the corresponding group of pointers is interpreted as follows:
   - If the pointer group is designated "illegal" as explained above this is reported at the AU-3/STS-1 level;
   - If any pointer in the group is AIS then the AIS alarm is reported;
   - If any pointer in the group is LOP then LOP is reported.

The following examples illustrate this procedure. Consider first 16 AU-4s/STS-3cs in an STM-16/OC-48 frame. There are 144 pointer bytes, defining 48 pointers with the following statuses: Upon grouping as described above this results in the following groups: which yield the following AU-4/STS-3c status values: and these can be directly interpreted as 16 AU-4s/STS-3cs.

The second example is an STM-16/OC-48 frame containing 4 AU-4-4cs/STS-12cs. The 48 pointer status values are: Grouping the registers yields: This yields the AU-4/STS-3c status sequences of: and thus the 4 * AU-4-4c/STS-12c structure.

The final example is of mixed payloads, comprising 4 AU-4s/STS-3cs, followed by 2 AU-4-4cs/STS-12cs followed by 3 AU-3s/STS-ls, an AU-4/STS-3c, 3 more AU-3s/STS-1s and a final AU-4/STS-3c. The pointer registers in this case contain: Grouping yields the groups: This yields an AU-4/STS-3c status sequence of: which leads to the interpretation:
AU-4/STS-3c
AU-4/STS-3c
AU-4/STS-3c
AU-4/STS-3c
AU-4-4c/STS-12c
AU-4-4c/STS-12c
AU-3/STS-1, AU-3/STS-1, AU-3/STS-1
AU-4/STS-3c
AU-3/STS-1, AU-3/STS-1, AU-3/STS-1
AU-4/STS-3c

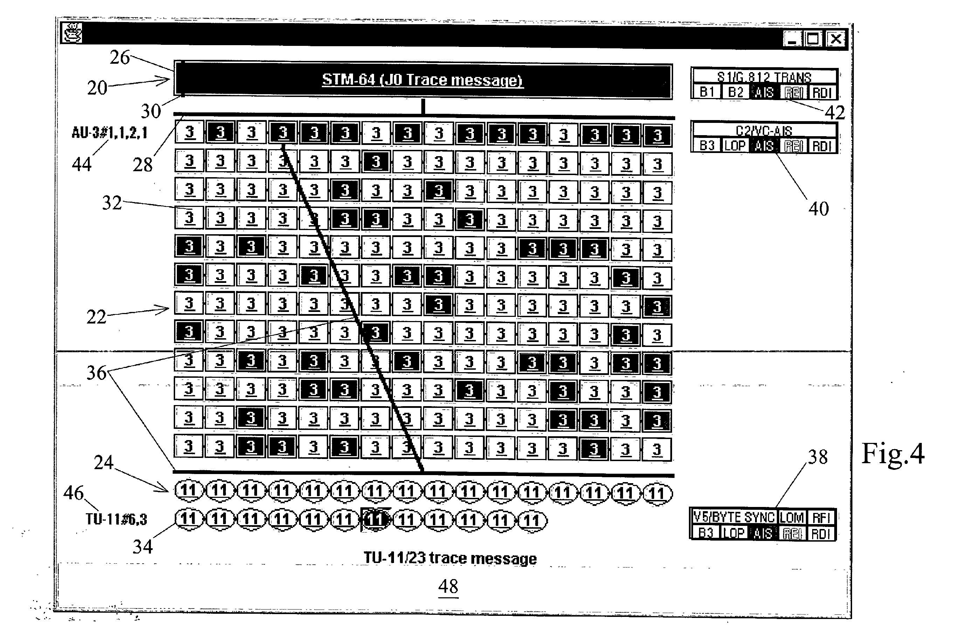

The structural information derived by the payload structure analyser 16 as described above can be used in various different ways. For example, as indicated in Figure 2, the output from the analyser 16 can be supplied to an output module 18, such as an interactive graphical display unit (screen, keyboard and pointing device) or a printer. Figures 4 to 9 show examples of displays or print-outs which can be generated to illustrate graphically the structure information derived by the analyser 16.

Referring to Figure 4, a first display comprises three major areas: an upper area 20, representing an overall frame (in this case an SDH STM-64 frame); a middle area 22, representing the administrative unit (AU) structure of the frame; and a lower area 24, representing the tributary unit (TU) structure within the AUs. Where appropriate another area may be included, corresponding to Plesiochronous Digital Hierarchy (PDH) structure within the TUs.

The upper area 20 contains a rectangle 26 depicting the overall frame, and labelled with a caption describing the frame type. The caption is underlined to indicate that the frame contains structure which can be viewed in more detail in other areas of the display, i.e. in the middle area 22. The relationship between the two areas is indicated graphically by a connector line 28 between them and by a box-shaped frame cursor 30 on the frame rectangle (see below).

The middle area 22 contains a 16x12 grid of rectangles 32, each of which represents one of the 192 AU-3 administrative units in the frame. The status of these AUs as AU-3 channels is confirmed by the underlined caption "3" on each one. The sequential position of each unit in the STM-64 frame is shown by the row-major ordering of the AUs, indicated by short horizontal connecting lines between the rectangles 32. One of the AUs (the fourth one) is selected for more detailed display of its constituent TUs, as described below. The position and size of this selected AU relative to the other AUs within the overall frame are indicated diagrammatically in the upper area 20 by the positioning and width of the frame cursor 30 along the frame rectangle 26 (if the size of the AU is small relative to the frame, this cursor 30 may appear collapsed to a line rather than a box).

The lower area 24 contains twenty-eight circles 34, each representing a TU within the fourth AU in the frame. The relationship of the TUs to the hierarchy of AUs is indicated by a connector line 36 extending from the relevant AU rectangle 32 to the grid of TU circles. A specific one of the TUs (the twenty-third) is highlighted, for example in response to user selection via a pointing device controlling a cursor (not shown), for detailed display of its status. This status can be determined by the apparatus by, for example, interpretation and analysis of payload pointers as described above and by inspection of data in the Path Overhead contained within the frame payload for that particular TU. The status is shown in a status block 38 at the right-hand side of the lower area 24, and includes the condition of parameters such as Remote Failure Indication (RFI), LOP, AIS, Remote Error Indication (REI) and Remote Defect Indication (RDI).

The middle and upper areas 24 and 22 have similar status blocks 40 and 42 associated with them in close proximity, giving similar information for the individual AUs and the overall frame.

Selected parameters in the status blocks are allocated distinctive shadings or colours, e.g. red for AIS, blue for LOM or LOP, grey for REI and yellow for RDI. If any of the TU's has one of these parameters set, that TU is shaded with the colour corresponding to that parameter. Thus, as shown in Figure 4, the highlighted TU has AIS set and is accordingly shaded correspondingly to the AIS parameter. Likewise the AU containing that TU is also shaded with that colour, as is the entire frame depicted in the upper area 22 of the display. Thus key summary information about the frame and each of its component channels (AUs and TUs) is immediately apparent from the shape and shading of the graphical element corresponding to that channel.

Labels 44 and 46 at the left-hand side of the display in the middle and lower areas 22 and 24 respectively identifies the type of channel currently highlighted, and gives its exact location within the frame. Each label is positioned vertically to be at the level of the channel element to which it relates, to assist in indicating its relationship to that element. A message area 48 at the foot of the display enables a channel's trace message to be displayed as well.

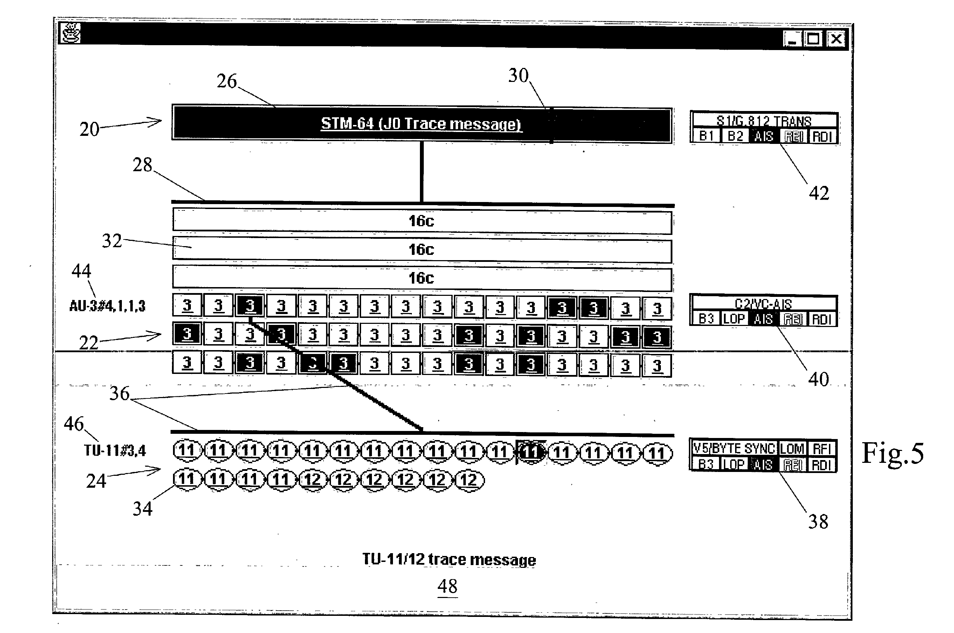

Figure 5 shows a display for another STM-64 frame, with a different channel structure to that shown in Figure 4. Elements in Figure 5 (and in the subsequent figures discussed below) which correspond to elements in Figure 4 have like reference numbers. In the case of the frame shown in Figure 5, there are three AU-4-16c channels, plus forty-eight AU-3 channels. The higher capacity of the AU-16 channels is depicted graphically by the larger size of the rectangles representing these channels, relative to the AU-3 rectangles.

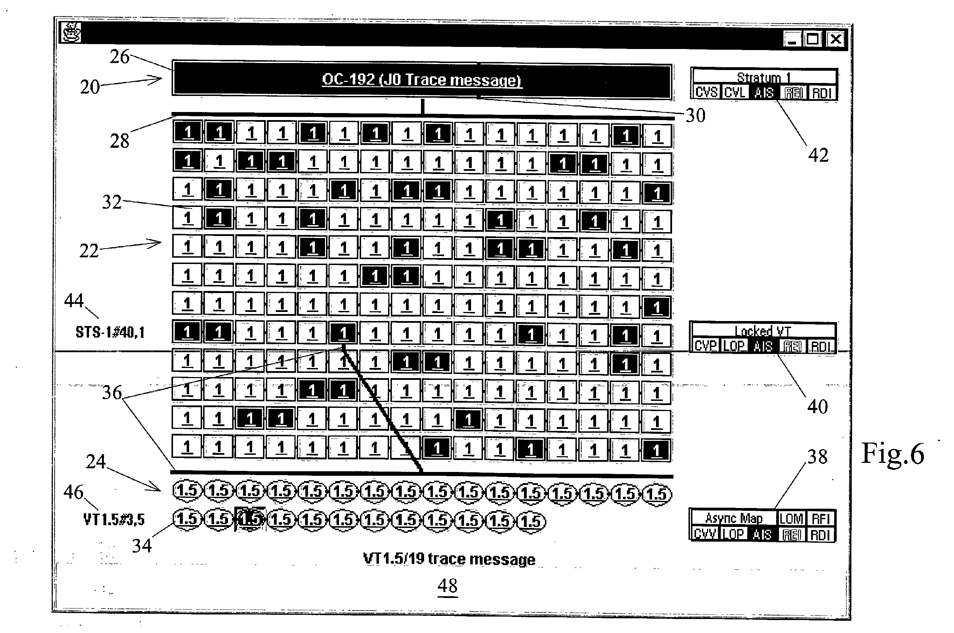

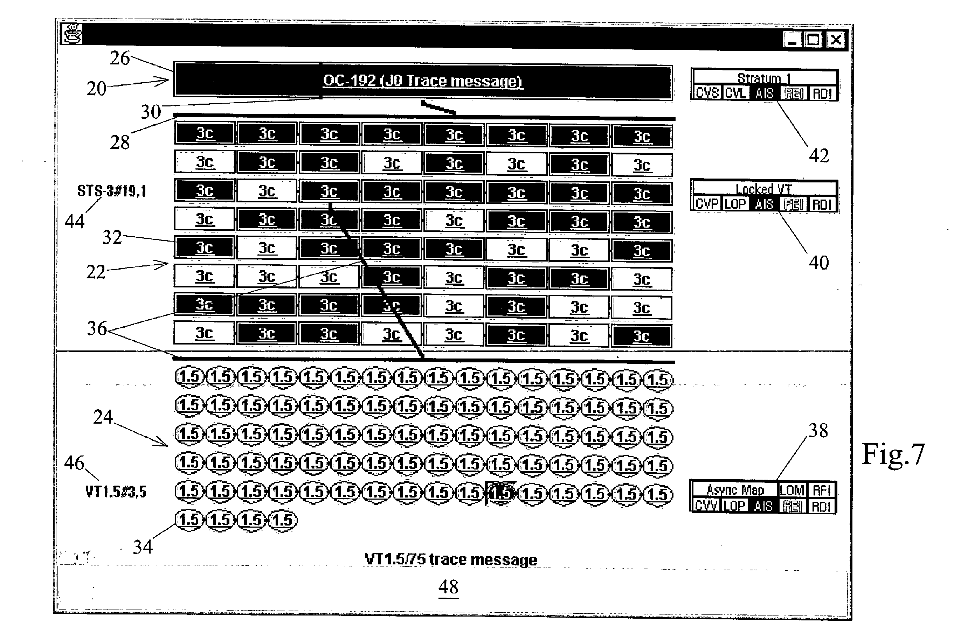

Figures 6 and 7 are also somewhat similar to Figure 4, but they show SONET OC-192 frames, rather than SDH frames, and are therefore labelled appropriately. Thus the channels in the middle area of Figure 6 for example are captioned "1", for STS-1. In Figure 7 they are captioned "3c", representing concatenated STS-3c channels.

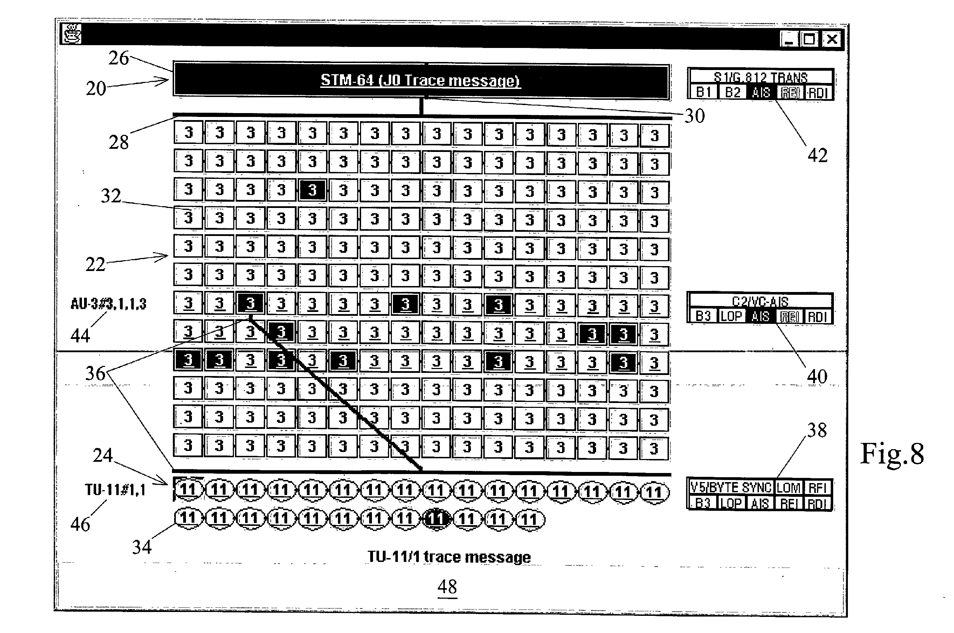

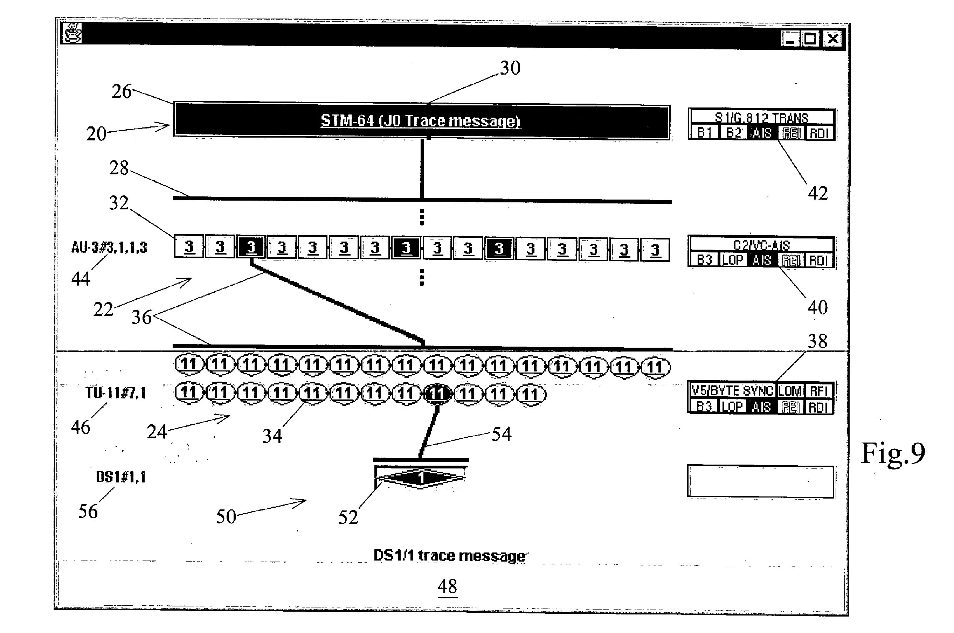

Figures 8 and 9 illustrate how areas of the display can be compressed when necessary to accommodate more detail in other parts of the display. Figure 8 shows a display generally similar to that of Figure 4. The user may desire more detail about the twenty-fifth TU channel, which is highlighted to show an active alarm parameter. To enable this detail to be displayed, the middle area 22 is compressed, as shown in Figure 9, so that only the row of AU-3 channels containing the TU channel in question continues to be displayed. The additional space thus made available is used to display a new lower-most area 50, containing a diamond-shaped display element 52 representing a DS1 PDH telecommunications channel carried by the relevant TU channel. The relationship between these channels is depicted by a connector line 54, and the identity of the DS1 channel is specified in an associated label 56.

## Claims

1. A method of analysing a data communications signal to identify one of a plurality of hierarchically-organised data structures to which it conforms, comprising the steps of:
receiving the data communications signal;
identifying pointers within the signal related to data payloads carried by the signal;
allocating to each pointer one of a predetermined plurality of statuses indicative of predetermined characteristics of the data payload associated with that pointer;
grouping the pointers in accordance with multiplexing of component parts of the associated data payloads; and
analysing in combination the statuses of the grouped pointers to determine the data structure of the signal.

2. The method of claim 1, wherein the plurality of pointer statuses comprises a normal status, a status indicative of concatenation, a status indicative of an alarm condition, and a status indicative of an invalid pointer value.

3. The method of claim 1 or claim 2, wherein the statuses of the grouped pointers are analysed in accordance with the tables in Figures 3*a* and 3*b*.

4. A method of displaying structural information relating to a data communications signal conforming to a hierarchical data structure, comprising the steps of:
allocating respective portions of a display to respective levels of a hierarchical data structure;
displaying within each display portion at least one graphical element corresponding to at least one data channel within the data structure level represented by that display portion;
controlling the relative sizes of graphical elements within each display portion in accordance with the data carrying capacity of the data channels to which those graphical elements correspond, within the data structure level represented by that display portion; and
controlling at least one other visual feature of each graphical element in accordance with a characteristic of the data channel to which that graphical element corresponds.

5. The method of claim 4, wherein the other visual feature of each graphical element is selected from shape, colour and caption.

6. The method of claim 4 or claim 5, wherein a user is enabled to interact with the display to select any graphical element for display of additional information about the data channel to which the selected graphical element corresponds.

7. The method of claim 6, wherein additional information about the data channel to which the selected graphical element corresponds is displayed in an area of the display adjacent to the display portion representing the data structure level containing that data channel.

8. The method of claim 6, wherein the quantity of information included in display portions representing data structure levels other than the one containing the data channel to which the selected graphical element corresponds is varied to provide space for displaying information about that data channel.

9. The method of any one of claims 4 to 8, wherein the relationship between data channels at different data structure levels is indicated by connector lines between graphical elements corresponding to those data channels in the corresponding display portions.

10. The method of any one of claims 4 to 9, wherein the shape of a graphical element is selected to be a rectangle, a circle or a diamond in accordance with protocol level of the corresponding data channel.

11. The method of any one of claims 4 to 10, wherein the colour of a graphical element is selected to indicate a characteristic of the corresponding data channel, the characteristic being any one of alarm condition, remote error, remote defect or loss of a pointer value.

12. The method of any one of claims 4 to 11, wherein a caption for each graphical element provides information about the protocol level of the corresponding data channel.

13. The method of any one of claims 4 to 12, wherein the graphical elements within each display portion are disposed in a generally rectangular array.

14. The method of any one of claims 4 to 13, wherein the data communications signal is a Synchronous Digital Hierarchy or Synchronous Optical Network signal.
